# EUROPEAN PATENT SPECIFICATION

(11) **EP 2 907 291 B1**
(45) Date of publication and mention of the grant of the patent: **03.11.2021**
(21) Application number: 13805530.6
(22) Date of filing: 25.09.2013
(51) Int. Cl.: H04L 29/06, G06F 9/455

(54) **VIRTUAL FIREWALL MOBILITY**
VIRTUELLE FIREWALL-MOBILITÄT
MOBILITÉ DE PARE-FEU VIRTUEL

(30) Priority: 10.10.2012 US 201213648755
(43) Date of publication of application: 19.08.2015
(73) Proprietor: Telefonaktiebolaget LM Ericsson (publ), 164 83 Stockholm (SE)
(72) Inventor: ZHU, Zhongwen, Ville Saint-Laurent, Québec H4R 3H7 (CA); POURZANDI, Makan, Montreal, Québec H4A 2L1 (CA)
(74) Representative: Ericsson
(86) International application number: PCT/IB2013/058857
(87) International publication number: WO 2014/057380

(56) References cited:
- US-A1- 2009 249 438
- GAO XIAOPENG ET AL: "VNSS: A network security sandbox for virtual computing environment", INFORMATION COMPUTING AND TELECOMMUNICATIONS (YC-ICT), 2010 IEEE YOUTH CONFERENCE ON, IEEE, 28 November 2010 (2010-11-28), pages 395-398, XP031914174, DOI: 10.1109/YCICT.2010.5713128 ISBN: 978-1-4244-8883-4
- ZAHRA TAVAKOLI ET AL: "A Framework for Security Context Migration in a Firewall Secured Virtual Machine Environment", 29 August 2012 (2012-08-29), INFORMATION AND COMMUNICATION TECHNOLOGIES, SPRINGER BERLIN HEIDELBERG, BERLIN, HEIDELBERG, PAGE(S) 41 - 51, XP047012979, ISBN: 978-3-642-32807-7 page 2, lines 1-33 paragraphs [02.3], [0003], [0004], [0005], [05.1]
- "Virtual machine migration by respecting the security policies", IP.COM JOURNAL, IP.COM INC., WEST HENRIETTA, NY, US, 4 December 2008 (2008-12-04), XP013128296, ISSN: 1533-0001

## Description

### TECHNICAL FIELD

This invention relates generally to cloud computing security. In particular, systems and methods for handling virtual services, such as firewall services, during virtual machine movement are provided.

### BACKGROUND

With the rapid evolution of Cloud Computing it has become increasingly common to run computer programs on virtual machines operating on servers. A virtual machine (VM) is a software implementation of a machine (i.e. a computer) that executes programs like a physical machine. The physical hardware on which virtual machines run is referred to as the host or host computer(s) and can reside in data center facilities.

Data centers are facilities used to house computer systems and associated components, typically including routers and switches to transport traffic between the computer systems and external networks. Data centers generally include redundant power supplies and redundant data communications connections to provide a reliable infrastructure for operations and to minimize any chance of disruption. Information security is also a concern, and for this reason a data center must offer a secure environment to minimize any chance of a security breach.

Virtualization has several advantages over conventional computing environments. The operating system and applications running on a virtual machine often require only a fraction of the full resources available on the underlying physical hardware on which the virtual machine is running. A host system can employ multiple physical computers, each of which runs multiple virtual machines. Virtual machines can be created and shut down as required, thus only using the resources of the physical computer(s) as needed.

Another advantage of virtualization is the elasticity and flexibility provided by the ability to manipulate and move a virtual machine from one physical site to another, or to move a virtual machine between hosts within the same data center. Virtual machines can be moved in order to better utilize the host machines and to provide the flexibility to scale up or down in size.

Many data centers use service appliances, employing dedicated hardware and software, to provide various services in the data center. Such services can include firewall services, Unified Threat Management (UTM) services, intrusion detection and prevention systems (IDS/IPS), data loss prevention (DLP) systems, Proxy/Gateway services, and other security services. In a conventional homogeneous cloud computing environment, all host machines in a data center use similar network architectures, operating systems, configuration and protocols and offer substantially common features and capabilities. When moving a virtual machine between hosts within a homogeneous network, it can be assumed that a service appliance is available at the destination host capable of maintaining any service(s) required by the virtual machine.

The virtualization of such services provided by service appliances is also gaining momentum. For example, a virtual firewall (VF) is a network firewall service running entirely within a virtualized environment which can provide the same packet filtering and monitoring as is conventionally provided by a physical network firewall or firewall service appliance. When a virtual machine is moved to a new host node, its associated firewall policies and any ongoing session related information or behavioural monitoring related information may also need to be properly migrated to the new host. When the associated firewall service is implemented as a virtual firewall, further considerations are required prior to migrating the virtual machine.

Therefore, it would be desirable to provide a system and method that obviate or mitigate the above described problems.

US 2009/249438 A1 discloses a method of maintaining multiple firewalls on multiple host nodes. Each host node runs one or more virtual machines. For at least a first host node, the method maintains multiple sets of policies for multiple virtual machines that run on the first host node. The method, upon detecting that a particular virtual machine has been moved from the first host node to a second host node, removes a set of policies associated with the particular virtual machine from the first host node and supplies the set of policies to the second host node.

Further, the documents GAO XIAOPENG et al.: "VNSS: A network security sandbox for virtual computing environment" and ZAHRA TAVAKOLI et al.: "A Framework for Security Context Migration in a Firewall Secured Virtual Machine Environment" disclose methods and systems of the prior art for providing network security in a virtual machine environment.

### SUMMARY

It is an object of the present invention to obviate or mitigate at least one disadvantage of the prior art.

The above object is solved by the subject-matter according to the independent claims. Advantageous realizations are defined in the dependent claims.

In a first aspect of the present invention, there is provided a method for managing migration of a virtual machine including the steps of determining that a virtual machine, instantiated in a first host and associated with a first virtual service in the first host, should be migrated to a second host and determining that functionality provided in the first host by the first virtual service is unavailable in the second host. A second virtual service is instantiated in the second host to provide functionality corresponding to that provided by the first virtual service and a copy of the virtual machine is instantiated in the second host.

In an embodiment of the first aspect of the present invention, the method further comprises the step of shutting down the virtual machine in the first host.

In another embodiment, the first virtual service implements at least one of a firewall service, an Internet Protocol Security (IPSec) service, a Virtual Private Network (VPN) service, a load balancing service, an intrusion detection and prevention system (IDS/IPS), or a Unified Threat Management (UTM) service.

In another embodiment, the first host is a first data center and the second host is a second data center.

In another embodiment, the method further comprises the step of synchronizing session data between the first virtual service and the second virtual service. Synchronizing session data can include capturing state information associated with a session being handled by the virtual machine and transferring the state information to the second virtual service. Session data can include policy information related to the session, an identifier of a user associated with the session, or an address associated with the session.

In another embodiment, the step of determining that functionality provided in the first host by the first virtual service is unavailable in the second host can include requesting service information from the second host.

In another embodiment, the step of instantiating the second virtual service can include sending instructions to launch a copy of the first virtual service in the second host. The step of instantiating the copy of the virtual machine in the second host can include sending instructions to the second host.

In a second aspect of the present invention, there is provided a cloud management device comprising a memory for storing instructions and a processing engine configured to execute the instructions. The processing engine is configured for determining that a virtual machine, instantiated in a first host and associated with a first virtual service in the first host, should be migrated to a second host. The processing engine is configured for determining that functionality provided in the first host by the first virtual service is unavailable in the second host to provide functionality corresponding to that provided by the first virtual service. The processing engine instantiates a second virtual service in the second host and instantiates a copy of the virtual machine in the second host.

In an embodiment of the second aspect of the present invention, the cloud management device further comprises a communication interface for communicating with the first and second hosts. The communication interface can be configured to receive state information associated with a session being handled by the virtual machine from the first host and to transfer the state information to the second virtual service. The communication interface can be configured to send instructions to the second host to launch a copy of the first virtual service. The communication interface can be configured to send instructions to the second host to launch a copy of the virtual machine.

In another embodiment, he processing engine is configured to synchronize session data between the first virtual service and the second virtual service. The session data can include policy information related to the session, an identifier of a user associated with the session, or an address associated with the session.

In another embodiment, processing engine is configured to shut down the virtual machine in the first host.

In another embodiment, the first virtual service implements at least one of a firewall service, an Internet Protocol Security (IPSec) service, a Virtual Private Network (VPN) service, a load balancing service, an intrusion detection and prevention system (IDS/IPS), or a Unified Threat Management (UTM) service.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein;
Figure 1 is a block diagram of an example cloud computing environment;
Figure 2 is a call flow diagram illustrating one or more embodiments;
Figure 3 is a flow chart of a method according to one or more embodiments; and
Figure 4 is a block diagram of an example cloud management device.

### DETAILED DESCRIPTION

The present invention is directed to a system and method for handling the migration of virtual machines and their associated stateful or stateless virtual services from one host to another.

Reference may be made below to specific elements, numbered in accordance with the attached figures. The discussion below should be taken to be exemplary in nature, and not as limiting of the scope of the present invention. The scope of the present invention is defined in the claims, and should not be considered as limited by the implementation details described below, which as one skilled in the art will appreciate, can be modified by replacing elements with equivalent functional elements.

Virtualized services can be divided into two categories: stateless services and stateful services. A stateless virtual firewalling mechanism does not need to keep state information for its associated virtual machine. For example, when configured to filter all User Datagram Protocol (UDP) connections to a VM, there is no need for the virtual firewall to keep track of any previous or ongoing UDP connection to the VM. In this scenario, if the virtual machine migrates from one site to another and a virtual firewall is available at the destination that provides the required functionality, the stateless firewall mechanisms can apply without any loss of information.

In contrast, stateful virtual firewalling mechanisms need to keep the state of any connections and sessions to the virtual machine in order to be efficient. For example, a virtual firewall can be configured to keep track of Transmission Control Protocol (TCP) handshakes to prevent attacks. In this scenario, the information related to any persistent connections and/or sessions needs to be migrated along with the virtual machine to avoid the costs associated with restarting the same security mechanisms at the destination site. The general concept of stateful firewalling can be extended to any security mechanism which needs to keep track of already established connections, such as intrusion detection and prevention (IDS/IPS) and application firewalling mechanisms.

When virtual machine migration occurs, it does not impact a physical firewall deployed in front of the data center or any service appliance operating in the cloud computing environment. For a seamless virtual machine migration between sites, any stateful data can be synchronized between the hardware appliance services in those sites. However, prior to moving a virtual machine associated with a virtual service, it must be determined if a corresponding virtual service exists and is available at the destination site. If a virtual service that provides the same features as required by the migrating virtual machine is not available at the destination, a new virtual service will need to be launched at the destination site. This newly launched virtual service can then receive any stateful data from the virtual service in the source site before it is ready for handling traffic associated with the migrated virtual machine.

In a cloud computing environment protected by hardware appliances, there is no need to check if a corresponding virtual service exists at the destination prior to moving a virtual machine between sites. In a homogeneous network, the underlying physical hardware and platform is substantially similar between the various sites. When the data center services, such as security and firewall services, are provided by service appliances, it can be safely assumed that equivalent functionality is available at the destination site. As cloud computing environments move towards more heterogeneous networks and the use of virtualized services, further handling of virtual machine mobility between data centers is required.

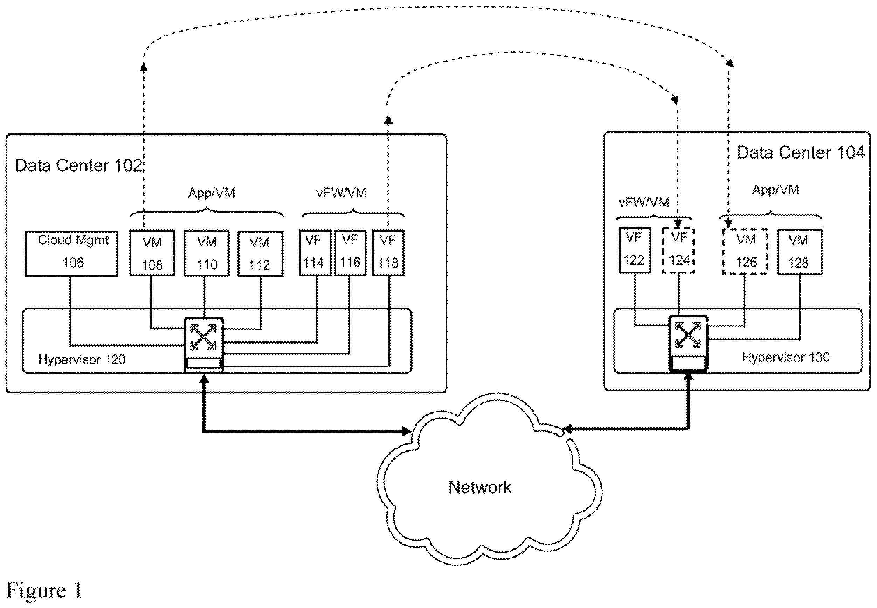

Figure 1 illustrates an embodiment of a cloud computing environment in which virtual machine mobility can occur between data centers, A data center 102 at a first site and a data center 104 at a second site are connected via network 100. A cloud management entity 106 is provided at data center 102. In some embodiments, the cloud management device 106 may physically reside outside of the data centers or be distributed between various data centers. For the purpose of this example, it will be assumed that the cloud management entity 106 resides in data center 102 but also manages data center 104. Three virtual machines 108, 100, 112 are allocated for running an application at data center 104. Three virtual machines are dedicated to running a virtual firewall (VF), shown as VFs 114, 116, 118, that is used to protect the other VMs in the data center 102. The virtual firewall can also provide security for the cloud management 106. A hypervisor 120 acts as the virtual machine manager, providing hardware visualization which allows for a virtual operating platform for managing multiple or different operating systems. The cloud management 106 can be implemented as a dedicated blade for provisioning configuration management over the data centers 102 and 104 and controlling the hypervisors 120 and 130 and the underlying physical hardware. The cloud management entity 106 allows administrators to manage hypervisors 120 and 130 as well as providing an interface to the cloud tenants who rent the virtual machines from the cloud provider.

Similarly, the data center 104 at the second site has a hypervisor 130, a VM 128 and a VF 122. It should be noted that while Figure 1 shows one hypervisor per data center for exemplary purposes, in practice, a data center can include thousands of servers running thousands of instances of hypervisors.

The cloud management entity 106 decides that VM 108 is to be moved from data center 102 to data center 104. This VM 108 makes use of the virtual firewall service provided by VF 118. The cloud management 106 is responsible for coordinating the movement of the VM 108, and thus, must ensure that corresponding virtual firewalling service is available at data center 104 and any persistent data associated with VM 108 is also transferred to data center 104. The cloud management 106 can determine if the required firewall functionality is provided by the existing VF 122 at data center 104. If not, the cloud management 106 can initiate the launch of a new VF 124. If the virtual firewall service is stateful, persistent session-related data can be synchronized between VF 118 and VF 124. The cloud management 106 can then initiate the launch of a copy of VM 108 as new VM 126 in data center 104. Following the successful instantiation of VM 126 and VF 124, the cloud management 106 can determine that the migrated VM 126 is ready to handle traffic.

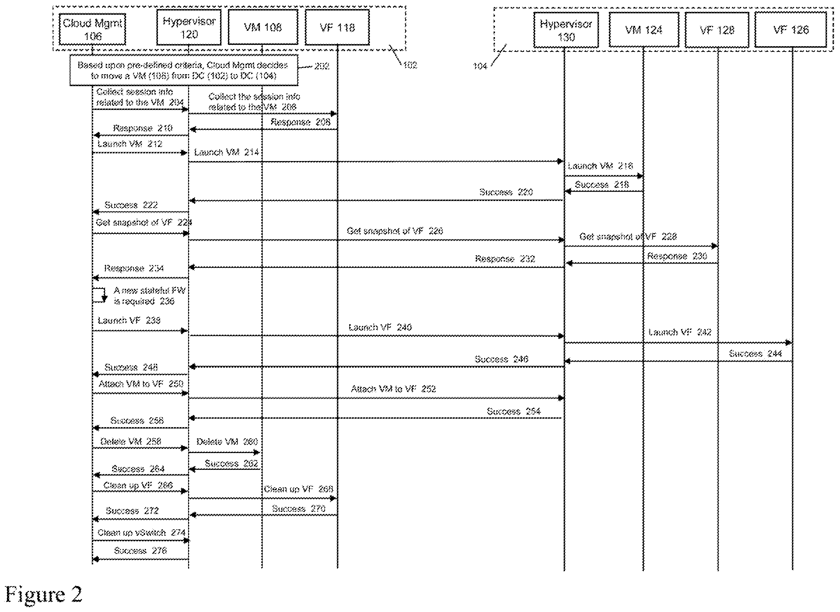

Figure 2 is a call flow diagram illustrating an example process for moving a virtual machine between data centers. The process begins in step 202 when the cloud management entity 106 determines that a virtual machine, VM 108, should move from a first data center 102 to a second data center 104. The cloud management 106 can decide that the VM 108 should move based on a number of reasons. Such pre-defined criteria can include balancing loads between data centers, handling a data center fault or recovery, optimizing the use of the underlying physical resources, or to provide the ability for the virtual machine to scale up or scale down. The cloud management 106 requests the hypervisor 120 to collect session information related to VM 108 (step 204). The hypervisor 120, in turn, requests this information from the associated VF 118 (step 206). VF 118 responds with the persistent session data related to VM 108 (step 208), and the hypervisor 102 returns the data to the cloud management 106 (step 210).

The cloud management 106 instructs the virtualization framework at data center 104 to launch a copy of VM 108 by sending a message to hypervisor 120 (step 212), which relays the instruction to hypervisor 130 (step 214) via the network 100. The hypervisor 130 instantiates a copy of VM 108 as newly launched VM 124 at data center 104 (step 216). The successful instantiation of VM 124 is acknowledged to hypervisor 130 (step 218), hypervisor 120 (step 220), and cloud management 106 (step 222).

In step 224 a "snapshot" of the existing virtual firewalling services at data center 104 is requested by cloud management 106. Hypervisor 120 relays the request to hypervisor 130 (step 226) and hypervisor 130 requests the information from the existing virtual firewall VF 128 (step 228). It will be appreciated that if multiple virtual firewalls exist in data center 104, hypervisor 130 can request each of them to return a list of services, capabilities and/or functionality offered. VF 128 returns the requested snapshot data to hypervisor 130 (step 230) and it is forwarded to hypervisor 120 (step 232) and cloud management 106 (step 234). The cloud management entity 106 can then determine if a new virtual firewall is required at data center 104, to offer corresponding services as VF 118 has been providing to VM 108, based on the response from the existing virtual firewall VF 128.

In step 236 it is determined that a new stateful virtual firewall is required at data center 104. Cloud management 106 initiates the launch of the new virtual firewall by sending instruction through hypervisor 120 (step 238) to hypervisor 130 (step 240). Hypervisor 130 instantiates a new virtual firewall, VF 126, with the required functionality (step 242). The persistent session data gathered from VF 118 can also be transferred to VF 126 with the launch instructions (step 242). Alternatively, a separate step of synchronizing the session data between VF 118 and VF 126 can be provided. The successful launch of VF 126 is acknowledged to hypervisor 130 (step 244), hypervisor 120 (step 246) and cloud management 106 (step 248).

Following the launch of both VM 124 and VF 126, cloud management 106 can then instruct hypervisor 130, through hypervisor 120, to attach VM 124 to VF 126 (steps 250 and 252). By attaching, or associating. VM 124 with VF 126, all service related traffic directed towards VM 124 will go through VF 126. The successful attach is acknowledged to hypervisor 120 (step 254) and cloud management 106 (step 256).

At this point in the process, traffic is now able to be handled by the migrated VM 124 and associated VF 126. Cloud management 106 can instruct hypervisor 120 to delete the original VM 108 in data center 102 (step 258). Hypervisor 120 shuts down VM 108 (step 260) and the successful deletion is acknowledged (steps 262 and 264). Similarly, cloud management 106 can instruct hypervisor 120 to clean up VF 118 (step 266). VF 118 is instructed to remove any remaining session data associated with now deleted VM 108 (step 268). The step of cleaning up VF 118 can also include shutting down any security feature that is not used by any other virtual machines or applications in the first data center 102. VF 118 acknowledges the successful clean up (steps 270 and 272). Likewise, cloud management 106 can instruct hypervisor 120 to remove routing information related to VM 108 from its virtual switches (step 274) and hypervisor 120 acknowledges a successful clean up (step 276).

It should be noted that in the embodiment shown in Figure 2, session information was captured prior to the steps of launching a new virtual machine in the destination host, determining that a new virtual firewall is required at the destination and launching that new virtual firewall. It will be appreciated by those skilled in the art that the order of these steps can be altered without affecting the scope of the present invention. For example, session information can be captured and synchronized with the new virtual firewall at any point in the process prior to allowing the new virtual firewall (VF 126) to service traffic destined for the migrated virtual machine (VM 124).

While Figure 2 is directed to an embodiment of the present invention involving the use of a stateful virtual firewall, it will be understood by those skilled in the art that the mechanisms illustrated for verifying the existence or absence of the corresponding firewalling services in the second host 104 can also apply to embodiments related to stateless virtual services.

It should also be noted that in alternative embodiments, cloud management 106 may be enabled to exchange messages directly with hypervisor 130 as opposed to transmitting and receiving messages via hypervisor 120. As previously discussed, the physical location of the cloud management 106 entity or device is not germane to the present invention. In a scenario where a virtual machine is being moved within the same data center, a single hypervisor can be used for controlling the virtual machines and virtual services.

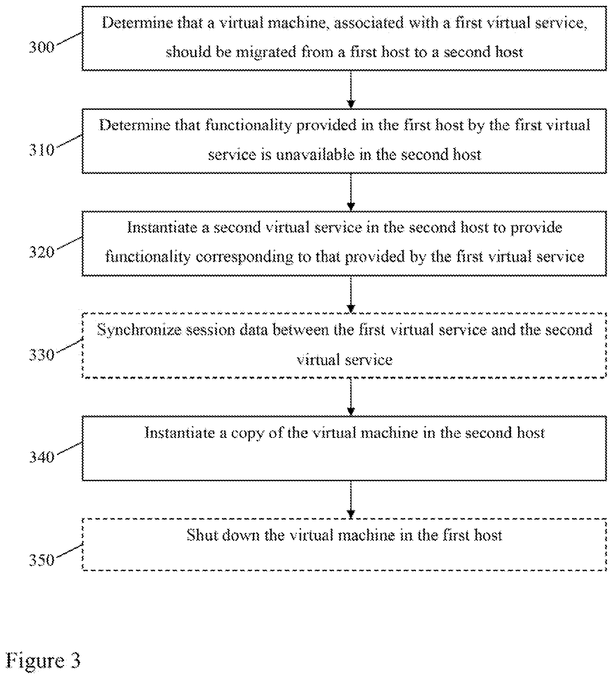

Figure 3 is a flow chart illustrating an example method for moving a virtual machine, associated with a virtual service, from a first host to a second host. The example method of Figure 3 can be implemented by a cloud management entity 106 or a data center manager in conjunction with various devices in a data center(s).

The example method begins with determining that a virtual machine should be migrated from a first host to a second host (block 300). The virtual machine is associated with a first virtual service in the first host The first and second hosts can be data centers. The determination to move a virtual machine can be based on pre-defined criteria. The determination to move the virtual machine can be made automatically or can be based on a manual input. The virtual machine to be moved can be associated with a first virtual service, such as a firewall service, in the first host. The virtual machine may utilize or require certain functionality provided by the first virtual service.

It is determined that functionality provided by the first virtual service is not available in the second host (block 310). This determination can be made by requesting a list of available virtual services from the second host and comparing it to the first virtual service associated with the virtual machine to be migrated. In response to this determination, a second virtual service is instantiated in the second host (block 320) to provide functionality corresponding to that provided by the first virtual service. Instantiating the second virtual service can include sending all information necessary to reproduce the function and state of the first virtual service in the second host. Optionally, a hypervisor can control the instantiation of the second virtual service. The hypervisor can receive an instruction to launch a copy of the first virtual service in the second host. The instruction message can include an image of the first virtual service to allow the hypervisor to instantiate the second virtual service as a clone of the first virtual service.

Session data related to the first virtual service is optionally transferred to the second virtual service to synchronize states between the virtual services in the first and second hosts (block 330). Synchronizing session data can be required when the virtual service is a stateful service, such as a stateful virtual firewall. Synchronization of state related to persistent session information allows the second virtual service to continue executing services related to the handling of session traffic where the first virtual session left off. State information can include policy information related to the session, an identifier of a user associated with the session, an address associated with the session, application data related to the session, or the session information at the protocol level.

Following the launch and optional synchronization of the virtual service in the second host, the virtual machine can be migrated and is instantiated in the second host (block 340). The step of instantiating the virtual machine in the second host can include sending instructions to a hypervisor in the second host to launch a copy of the virtual machine. The instructions can include an image of the virtual machine from the first host.

The embodiment illustrated in Figure 3 optionally includes the step of shutting down the virtual machine in the first host (block 350). The virtual machine in the first host can be shut down, or deleted, responsive to instantiating the virtual machine in the second host. Alternatively, the virtual machine can be shut down in response to transmitting an instruction indicating that the virtual machine in the second host is ready to handle traffic.

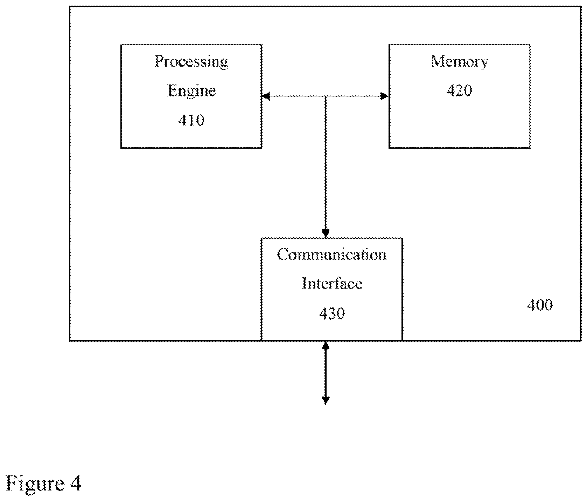

Figure 4 is a block diagram illustrating functional details associated with an example cloud management device 400. The cloud management device 400 can include a processing engine 410, a memory 420 and a communication interface 430. The cloud management device 400 can be implemented using dedicated underlying hardware or alternatively can, itself, be implemented as a virtual machine in the data center. The cloud management device 400 can perform the various embodiments, as described herein, related to controlling virtual machine and virtual service migration between hosts. The cloud management device 400 can perform these operations in response to a processing engine 410 executing instructions stored in a data repository such as memory 420. The instructions can be software instructions and the data repository can be any logical or physical computer-readable medium. The cloud management device 400, though shown in Figure 4 as a single entity, can be implemented by a number of different devices that are geographically distributed, as previously discussed.

The processing engine 410 is configured to determine that a virtual machine should be moved from a first host to a second host. The virtual machine can be determined to be associated with a first virtual service, such a virtual firewall in the first host. The processing engine 410 is configured to instantiate a second virtual service in the second host in response to determining that functionality corresponding to the first virtual service is not available in the second host. The processing engine 410 is further configured to instantiate a copy of the virtual machine in the second host. The processing engine 410 can be further configured to shut down the virtual machine in the first host.

The cloud management device 400 can include a communication interface 430 for communicating with the first and second hosts. The first and second hosts can be data centers. The communication interface 430 can communicate with hypervisors or other management entities in the data centers. The communication interface 430 can be configured to send instructions to the second host to launch a copy of the first virtual service in the second host. The communication interface 430 can also be configured to send instructions to the second host to launch a copy of the virtual machine in the second host

The processing engine 410 is optionally configured to synchronize session data between the first virtual service and the second virtual service. Synchronizing session data can include receiving state information at the communication interface 430 from the first host. The state information can be associated with a session being handled by the virtual machine. The processing engine 410 can transfer the state information to the second virtual service via the communication interface 430. Session data can include policy information related to the session, an identifier of a user associated with the session, or an address associated with the session.

The functionality provided by the first virtual service can include a firewall service, an Internet Protocol Security (JPSec) service, a Virtual Private Network (VPN) service, a load balancing service, an intrusion detection and prevention system (IDS/IPS), or a Unified Threat Management (UTM) service.

Embodiments of the invention may be represented as a software product stored in a machine-readable medium (also referred to as a computer-readable medium, a processor-readable medium, or a computer usable medium having a computer-readable program code embodied therein). The machine-readable medium may be any suitable tangible medium including a magnetic, optical, or electrical storage medium including a diskette, compact disk read only memory (CD-ROM), digital versatile disc read only memory (DVD-ROM) memory device (volatile or non-volatile), or similar storage mechanism. The machine-readable medium may contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention may also be stored on the machine-readable medium. Software running from the machine-readable medium may interface with circuitry to perform the described tasks.

0The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A method for managing migration of a virtual machine, comprising:
determining (300) that a virtual machine (108), instantiated in a first host (102) and associated with a first virtual firewall service (118) in the first host (102), should be migrated to a second host (104);
determining (310) that functionality provided in the first host (102) by the first virtual firewall service (118) is unavailable in the second host (104), wherein this determination is made by requesting a list of available virtual services from the second host (104) and comparing it to the first virtual firewall service (118) associated with the virtual machine (108) to be migrated;
in response to determining (310) that functionality is unavailable, instantiating (320) a second virtual firewall service (124) in the second host (104) to provide functionality corresponding to that provided by the first virtual firewall service (118);
synchronizing (330) session data between the first virtual firewall service (118) and the second virtual firewall service (124), wherein the step of synchronizing (330) session data includes capturing state information associated with a session being handled by the virtual machine (108) and transferring the state information to the second virtual firewall service (124), wherein the session data includes an address associated with the session; and
instantiating (340) a copy (126) of the virtual machine in the second host (104).

2. The method of claim 1, further comprising the step of shutting down (350) the virtual machine (108) in the first host (102).

3. The method of claim 1, wherein the first host (102) is a first data center and the second host (104) is a second data center.

4. The method of claim 1, wherein the session data includes policy information related to the session or an identifier of a user associated with the session.

5. The method of claim 1, wherein the step of determining (310) that functionality provided in the first host (102) by the first virtual firewall service (118) is unavailable in the second host (104) includes requesting service information from the second host (104).

6. The method of claim 1, wherein the step of instantiating (320) the second virtual firewall service (124) includes sending instructions to launch a copy of the first virtual firewall service (118) in the second host (104), and/or
wherein the step of instantiating (340) the copy (126) of the virtual machine in the second host (104) includes sending instructions to the second host (104).

7. A cloud management device (400), comprising:
a memory (420) for storing instructions;
a processing engine (410), configured to execute the instructions,
for determining that a virtual machine (108), instantiated in a first host (102) and associated with a first virtual firewall service (118) in the first host (102), should be migrated to a second host (104);
for determining that functionality provided in the first host (102) by the first virtual firewall service (118) is unavailable in the second host (104), wherein this determination is made by requesting a list of available virtual services from the second host (104) and comparing it to the first virtual firewall service (118) associated with the virtual machine (108) to be migrated;
for instantiating, in response to determining that functionality is unavailable, a second virtual firewall service (124) in the second host (104) to provide functionality corresponding to that provided by the first virtual firewall service (118);
for synchronizing session data between the first virtual firewall service (118) and the second virtual firewall service (124); wherein the synchronizing session data includes capturing state information associated with a session being handled by the virtual machine (108); and
for instantiating a copy (126) of the virtual machine in the second host (104); and
a communication interface (430) for communicating with the first and second hosts (102, 104),
wherein the communication interface (430) is configured to receive the captured state information associated with the session being handled by the virtual machine (108) from the first host (102) and to transfer the state information to the second virtual firewall service (124), wherein the session data includes an address associated with the session.

8. The cloud management device of claim 7, wherein the communication interface (430) is configured to send instructions to the second host (104) to launch a copy of the first virtual firewall service (118).

9. The cloud management device (400) of claim 7, wherein the communication interface (430) is configured to send instructions to the second host (104) to launch a copy (126) of the virtual machine.

10. The cloud management device (400) of claim 7, wherein the session data includes policy information related to the session or an identifier of a user associated with the session.

11. The cloud management device (400) of claim 7, wherein the processing engine (410) is configured to shut down the virtual machine (108) in the first host (102).

## Patentansprüche

1. Verfahren zur Verwaltung von Migration einer virtuellen Maschine, umfassend:
Bestimmen (300), dass eine virtuelle Maschine (108), die in einem ersten Host (102) instanziiert und mit einem ersten virtuellen Firewall-Dienst (118) im ersten Host (102) assoziiert ist, zu einem zweiten Host (104) migriert werden sollte;
Bestimmen (310), dass Funktionalität, die im ersten Host (102) durch den ersten Firewall-Dienst (118) bereitgestellt wird, im zweiten Host (104) nicht zur Verfügung steht, wobei diese Bestimmung durch Anfordern einer Liste von verfügbaren virtuellen Diensten vom zweiten Host (104) und Vergleichen derselben mit dem ersten virtuellen Firewall-Dienst (118) durchgeführt wird, der mit der zu migrierenden virtuellen Maschine (108) assoziiert ist;
Instanziieren (320) in Reaktion auf das Bestimmen (310), dass die Funktionalität nicht zur Verfügung steht, eines zweiten virtuellen Firewall-Dienstes (124) im zweiten Host (104), um Funktionalität bereitzustellen, die derjenigen entspricht, die durch den ersten virtuellen Firewall-Dienst (118) bereitgestellt wird;
Synchronisieren (330) von Sitzungsdaten zwischen dem ersten virtuellen Firewall-Dienst (118) und dem zweiten virtuellen Firewall-Dienst (124), wobei der Schritt des Synchronisierens (330) von Sitzungsdaten ein Erfassen von Zustandsinformationen, die mit einer Sitzung assoziiert sind, die von der virtuellen Maschine (108) bearbeitet wird, und Übertragen der Zustandsinformationen an den zweiten virtuellen Firewall-Dienst (124) umfasst, wobei die Sitzungsdaten eine Adresse umfassen, die mit der Sitzung assoziiert ist; und
Instanziieren (340) einer Kopie (126) der virtuellen Maschine im zweiten Host (104).

2. Verfahren nach Anspruch 1, ferner umfassend den Schritt des Herunterfahrens (350) der virtuellen Maschine (108) im ersten Host (102).

3. Verfahren nach Anspruch 1, wobei der erste Host (102) ein erstes Rechenzentrum ist, und der zweite Host (104) ein zweites Rechenzentrum ist.

4. Verfahren nach Anspruch 1, wobei die Sitzungsdaten Richtlinieninformationen in Bezug auf die Sitzung oder eine Kennung eines Benutzers umfassen, der mit der Sitzung assoziiert ist.

5. Verfahren nach Anspruch 1, wobei der Schritt des Bestimmens (310), dass Funktionalität, die im ersten Host (102) durch den ersten virtuellen Firewall-Dienst (118) bereitgestellt wird, im zweiten Host (104) nicht zur Verfügung steht, ein Anfordern von Dienstinformationen vom zweiten Host (104) umfasst.

6. Verfahren nach Anspruch 1, wobei der Schritt des Instanziierens (320) des zweiten virtuellen Firewall-Dienstes (124) ein Senden von Anweisungen zum Starten einer Kopie des ersten virtuellen Firewall-Dienstes (118) im zweiten Host (104) umfasst, und/oder wobei der Schritt des Instanziierens (340) der Kopie (126) der virtuellen Maschine im zweiten Host (104) ein Senden von Anweisungen an den zweiten Host (104) umfasst.

7. Cloud-Verwaltungsvorrichtung (400), umfassend:
einen Speicher (420) zum Speichern von Anweisungen;
eine Verarbeitungs-Engine (410), die so konfiguriert ist, dass sie die Anweisungen ausführt zum:
Bestimmen, dass eine virtuelle Maschine (108), die in einem ersten Host (102) instanziiert und mit einem ersten virtuellen Firewall-Dienst (118) im ersten Host (102) assoziiert ist, zu einem zweiten Host (104) migriert werden sollte;
Bestimmen, dass Funktionalität, die im ersten Host (102) durch den ersten Firewall-Dienst (118) bereitgestellt wird, im zweiten Host (104) nicht zur Verfügung steht, wobei diese Bestimmung durch Anfordern einer Liste von verfügbaren virtuellen Diensten vom zweiten Host (104) und Vergleichen derselben mit dem ersten virtuellen Firewall-Dienst (118) durchgeführt wird, der mit der zu migrierenden virtuellen Maschine (108) assoziiert ist;
Instanziieren in Reaktion auf das Bestimmen, dass die Funktionalität nicht zur Verfügung steht, eines zweiten virtuellen Firewall-Dienstes (124) im zweiten Host (104) um Funktionalität bereitzustellen, die derjenigen entspricht, die durch den ersten virtuellen Firewall-Dienst (118) bereitgestellt wird;
Synchronisieren von Sitzungsdaten zwischen dem ersten virtuellen Firewall-Dienst (118) und dem zweiten virtuellen Firewall-Dienst (124); wobei das Synchronisieren von Sitzungsdaten ein Erfassen von Zustandsinformationen umfasst, die mit einer Sitzung assoziiert sind, die von der virtuellen Maschine (108) bearbeitet wird; und
Instanziieren einer Kopie (126) der virtuellen Maschine im zweiten Host (104); und
eine Kommunikationsschnittstelle (430) zum Kommunizieren mit dem ersten und dem zweiten Host (102, 104),
wobei die Kommunikationsschnittstelle (430) so konfiguriert ist, dass sie die erfassten Zustandsinformationen, die mit der Sitzung assoziiert sind, die von der virtuellen Maschine (108) bearbeitet wird, vom ersten Host (102) empfängt und die Zustandsinformationen an den zweiten virtuellen Firewall-Dienst (124) überträgt, wobei die Sitzungsdaten eine Adresse umfassen, die mit der Sitzung assoziiert ist.

8. Cloud-Verwaltungsvorrichtung nach Anspruch 7, wobei die Kommunikationsschnittstelle (430) so konfiguriert ist, dass sie Anweisungen zum Starten einer Kopie des ersten virtuellen Firewall-Dienstes (118) an den zweiten Host (104) sendet.

9. Cloud-Verwaltungsvorrichtung (400) nach Anspruch 7, wobei die Kommunikationsschnittstelle (430) so konfiguriert ist, dass sie Anweisungen zum Starten einer Kopie (126) der virtuellen Maschine an den zweiten Host (104) sendet.

10. Cloud-Verwaltungsvorrichtung (400) nach Anspruch 7, wobei die Sitzungsdaten Richtlinieninformationen in Bezug auf die Sitzung oder eine Kennung eines Benutzers umfassen, der mit der Sitzung assoziiert ist.

11. Cloud-Verwaltungsvorrichtung (400) nach Anspruch 7, wobei die Verarbeitungs-Engine (410) zum Herunterfahren der virtuellen Maschine (108) im ersten Host (102) konfiguriert ist.

## Revendications

1. Procédé de gestion de migration d'une machine virtuelle, comprenant :
la détermination (300) qu'une machine virtuelle (108), instanciée dans un premier hôte (102) et associée à un premier service de pare-feu virtuel (118) dans le premier hôte (102), doit être migrée vers un deuxième hôte (104) ;
la détermination (310) qu'une fonctionnalité fournie dans le premier hôte (102) par le premier service de pare-feu virtuel (118) est indisponible dans le deuxième hôte (104), dans lequel cette détermination est réalisée par la demande d'une liste de services virtuels disponibles au deuxième hôte (104) et la comparaison de celle-ci au premier service de pare-feu virtuel (118) associé à la machine virtuelle (108) à migrer ;
en réponse à la détermination (310) qu'une fonctionnalité est indisponible, l'instanciation (320) d'un deuxième service de pare-feu virtuel (124) dans le deuxième hôte (104) pour fournir une fonctionnalité correspondant à celle fournie par le premier service de pare-feu virtuel (118) ;
la synchronisation (330) de données de session entre le premier service de pare-feu virtuel (118) et le deuxième service de pare-feu virtuel (124), dans lequel l'étape de la synchronisation (330) de données de session inclut la capture d'informations d'état associées à une session gérée par la machine virtuelle (108) et le transfert des informations d'état au deuxième service de pare-feu virtuel (124), dans lequel les données de session incluent une adresse associée à la session ; et l'instanciation (340) d'une copie (126) de la machine virtuelle dans le deuxième hôte (104).

2. Procédé selon la revendication 1, comprenant en outre l'étape de l'arrêt (350) de la machine virtuelle (108) dans le premier hôte (102).

3. Procédé selon la revendication 1, dans lequel le premier hôte (102) est un premier centre de données et le deuxième hôte (104) est un deuxième centre de données.

4. Procédé selon la revendication 1, dans lequel les données de session incluent des informations de politique relatives à la session ou un identifiant d'un utilisateur associé à la session.

5. Procédé selon la revendication 1, dans lequel l'étape de la détermination (310) qu'une fonctionnalité fournie dans le premier hôte (102) par le premier service de pare-feu virtuel (118) est indisponible dans le deuxième hôte (104) inclut la demande d'informations de service au deuxième hôte (104).

6. Procédé selon la revendication 1, dans lequel l'étape de l'instanciation (320) du deuxième service de pare-feu virtuel (124) inclut l'envoi d'instructions pour lancer une copie du premier service de pare-feu virtuel (118) dans le deuxième hôte (104), et/ou
dans lequel l'étape de l'instanciation (340) de la copie (126) de la machine virtuelle dans le deuxième hôte (104) inclut l'envoi d'instructions au deuxième hôte (104) .

7. Dispositif de gestion de cloud (400), comprenant :
une mémoire (420) pour stocker des instructions ;
un moteur de traitement (410) configuré pour exécuter les instructions,
pour la détermination qu'une machine virtuelle (108), instanciée dans un premier hôte (102) et associée à un premier service de pare-feu virtuel (118) dans le premier hôte (102), doit être migrée vers un deuxième hôte (104) ;
pour la détermination qu'une fonctionnalité fournie dans le premier hôte (102) par le premier service de pare-feu virtuel (118) est indisponible dans le deuxième hôte (104), dans lequel cette détermination est réalisée par la demande d'une liste de services virtuels disponibles au deuxième hôte (104) et la comparaison de celle-ci au premier service de pare-feu virtuel (118) associé à la machine virtuelle (108) à migrer ;
pour l'instanciation, en réponse à la détermination qu'une fonctionnalité est indisponible, d'un deuxième service de pare-feu virtuel (124) dans le deuxième hôte (104) pour fournir une fonctionnalité correspondant à celle fournie par le premier service de pare-feu virtuel (118) ;
pour la synchronisation de données de session entre le premier service de pare-feu virtuel (118) et le deuxième service de pare-feu virtuel (124) ; dans lequel la synchronisation de données de session inclut la capture d'informations d'état associées à une session gérée par la machine virtuelle (108) ; et
pour l'instanciation d'une copie (126) de la machine virtuelle dans le deuxième hôte (104) ; et une interface de communication (430) pour communiquer avec les premier et deuxième hôtes (102, 104),
dans lequel l'interface de communication (430) est configurée pour recevoir les informations d'état capturées associées à la session gérée par la machine virtuelle (108) depuis le premier hôte (102) et pour transférer les informations d'état au deuxième service de pare-feu virtuel (124), dans lequel les données de session incluent une adresse associée à la session.

8. Dispositif de gestion de cloud selon la revendication 7, dans lequel l'interface de communication (430) est configurée pour envoyer des instructions au deuxième hôte (104) pour lancer une copie du premier service de pare-feu virtuel (118).

9. Dispositif de gestion de cloud (400) selon la revendication 7, dans lequel l'interface de communication (430) est configurée pour envoyer des instructions au deuxième hôte (104) pour lancer une copie (126) de la machine virtuelle.

10. Dispositif de gestion de cloud (400) selon la revendication 7, dans lequel les données de session incluent des informations de politique relatives à la session ou un identifiant d'un utilisateur associé à la session.

11. Dispositif de gestion de cloud (400) selon la revendication 7, dans lequel le moteur de traitement (410) est configuré pour arrêter la machine virtuelle (108) dans le premier hôte (102).
